# EUROPEAN PATENT APPLICATION

(11) **EP 1 867 710 A1**
(43) Date of publication of application: **19.12.2007**
(21) Application number: 06729198.9
(22) Date of filing: 16.03.2006
(51) Int. Cl.: C12G 3/02, C12C 5/00

(54) **FERMENTED BEVERAGE USING FRACTIONATED CORN**

(30) Priority: 18.03.2005 JP 2005080708; 15.06.2005 JP 2005175770
(71) Applicant: SUNTORY LIMITED, Osaka-shi, Osaka 530-8203 (JP)
(72) Inventor: IZUMI, Takaaki, Kawasaki-shi Kanagawa 211-0053 (JP); KAKUDO, Yoichi, Hyogo, 6590092 (JP); FURUKUBO, Susumu, Osaka, 5670828 (JP); TAKAOKA, Seisuke, Tokyo, 1830026 (JP)
(74) Representative: Vossius & Partner
(86) International application number: PCT/JP2006/305201
(87) International publication number: WO 2006/100993

(57) **Abstract**

There is provided a technique for obtaining a high-quality fermented beverage, in particular, a beer taste beverage by using a non-wheat grain, for example, ungerminated corn, which is easily available and frequently used as a raw material for food and drink, without causing fermentation failure. The non-wheat grain is fractioned at least into a starch fraction and a protein fraction. The two fractions are separately treated with respective exogenous enzymes to obtain a saccharified starch and a protein decomposition product, which are used as raw materials for a mother solution for a fermentation step. In this way, a failure in a preparation step is overcome. Studies were made specifically on the blending ratio of the saccharified starch and the protein decomposition product thus separately prepared to determine a preferable blending ratio that does not cause fermentation failure in the fermentation step.

## Description

### TECHNICAL FIELD

The present invention relates to a fermented beverage using fractionated non-wheat grain as a fermentation material, and particularly, to a beer-taste beverage using a fractionated corn as a raw material.

### BACKGROUND ART

Conventionally, in fermented beverages such as a beer-taste beverage, an attempt to use ungerminated grain (100%) as a fermentation material in brewing has been often made. However, such a fermentation material differs from those for conventional beers and low-malt beer beverage (happoshu). Since malt is not used, endogenous enzymes of the malt (e.g., amylases and proteases) are not contained in the fermentation material. Therefore, exogenous amylases and proteases must be added in combination.

Taking corn, which is frequently used as a raw material for food and drink, as an example, even if corn is germinated, it is difficult to generate enzymes satisfying a desired quality, compared to malt obtained from germination of wheat.

Therefore, when corn is used as a raw material for a fermented beverage, corn must be liquefied before subjecting to a saccharification step in order to facilitate decomposition (saccharification) of starch by exogenous enzymes. The heating temperature during the liquefaction step is 90°C to 105°C, and, in many cases, exceeds optimal temperature ranges of the exogenous enzymes such as amylases and proteases to be used later. Therefore, saccharification cannot be performed in the same manner as in preparation of conventional beer and low-malt beer beverage in this state. To solve this, in a preparation step, ungerminated corn as a raw material is heated in the presence of water and a liquefying enzyme to liquefy, and thereafter, once cooled by cold water or a cooler to optimal temperatures for exogenous enzymes (e.g., amylases and proteases) to obtain a saccharified liquid. However, in the cooling operation, it is very difficult to cool the liquefied corn material to a desired temperature in view of the ungerminated corn material, calorie of water and volume of a preparation apparatus. In addition, in the saccharified liquid produced in the aforementioned manner, the reactions of the exogenous enzymes do not proceed well, with the result that saccharides and amino acids serving as nutritional sources for yeast during a fermentation step sometimes do not reach desired amounts required for fermentation (A catalogue titled U-Brew (Brewing with up to 100% unmalted grain and enzymes) by Enzyme Process Division, Bioindustrial Group, Novo Nordisk A/S, 1991, June).

In such a case, fermentation failure takes place. A large amount of young aroma is produced and saccharides remain unused. As a result, the taste of a finished product is not crisp/clear, which is fatal in view of the flavor/quality of a beer-taste beverage.

Furthermore, when corn is directly decomposed by exogenous enzymes to obtain a fermentation material, it has been particularly difficult to decompose the protein. For these reasons, corn has not yet been preferably used as a raw material for a fermented beverage, in particular, a beer-taste beverage.

### DISCLOSURE OF THE INVENTION

The present invention provides a technique for obtaining a high-quality fermented beverage, in particular, a beer-taste beverage, by using non-wheat grain, for example, ungerminated corn, which is easily available and frequently used as a raw material for food and drink, as a raw material, without causing fermentation failure.

To attain the object mentioned above, the present inventors conceived the idea that non-wheat grain (such as corn, preferably, ungerminated corn) is fractionated into individual components and then used as fermentation materials. specifically, the present inventors found that non-wheat grain as a raw material is fractionated at least into a starch fraction and a protein fraction, and the two fractions are separately treated with respective exogenous enzymes to obtain a saccharified starch and a protein decomposition product, which are used as raw materials for preparing a mother solution for a fermentation step. In this way, a failure in a preparation step is found to be overcome. Furthermore, the present inventors studied more specifically on the blending ratio of the saccharified starch and the protein decomposition product thus separately prepared to determine a preferable blending ratio that does not cause fermentation failure in a fermentation step. Based on these, the present invention was accomplished.

### BEST MODE FOR CARRYING OUT THE INVENTION

### Non-wheat grain

In the present invention, various types of grains except wheat can be used through fractionation. Examples of the non-wheat grains include corn, rice, buckwheat noodles, sorghum, foxtail millet, Japanese millet, and beans such as soy bean and pea. Note that the present invention is not directed to wheat. This is because even if the technique of the present invention is not used, germination, preparation and fermentation steps thereof proceed easily.

Of the non-wheat grains, corn is known to contain leucine plentifully in the amino acids constituting the protein. Leucine is a precursor for producing good flavor/taste of a fermented beverage, in particular, a beer-taste beverage. Therefore, corn can be preferably used. When corn is germinated and used in the same manner as in malt, fermentation failure takes place during a fermentation step. However, when corn is used after it is fractionated into components, the fermentation failure problem can be overcome. As corn, either one of germinated corn and ungerminated corn may be used in the present invention; however, ungerminated corn is preferable.

The types of corn include, but not particularly limited to, dent corn, flint corn, pop corn and waxy corn. Of them, dent corn is suitable as a raw material for a beer-taste beverage. Corn may be used after granular corn is ground. If corn is not fractionated into starch and peptides, processed products such as corn grits and corn flour may be used as a starting material.

### Fractionation of components of non-wheat grain

In the present invention, various types of grains except wheat, for example, corn, is fractionated into individual components, which are used as fermentation materials. Corn is fractionated at least into a starch component and a protein component. The fractionation method is not particularly limited; however, fractionation is performed, for example, by the following steps of:

Soaking corn in (soaking) water (soaking temperature : about room temperature, soaking time: about 48 hours); grinding the corn that absorbed water (a preferable grinder is a disc mill); separating germ moving up on the water surface after grinding; mashing the corn ground and eliminated the germ therefrom (a preferable crusher is a disc mill); passing mashed corn through a sieve; separating a fiber fraction remaining on the sieve (a preferable sieve: about 50 to 100 µm in mesh size); separating a starch fraction and a protein fraction based on difference in specific gravity, for example, sedimentation rate in a suspension solution; and recovering them. Alternatively, these fractions may be centrifugally separated.

### Enzymatic decomposition of starch fraction

The starch fraction is saccharified by a known method used in preparing saccharified liquid for brewing. When a liquefying enzyme (amylase) is used as an exogenous enzyme, a starch decomposition product (saccharified corn starch) can be prepared. The type, amount, reaction temperature and reaction time of the liquefying enzyme may be appropriately determined depending upon the fermented beverage to be produced. In the case of producing a beer-taste beverage, the following specific conditions used, for example.

The starch fraction is adjusted to pH 6 with calcium hydroxide. To the solution, heat resistant α-amylase (Termamyl 120L: Novozymes A/S) is added in an appropriate amount (0.025% to 0.5%). The resultant solution mixture is mixed well and heated at 103°C for 5 minutes while stirring. The temperature of the solution is reduced to 95°C and maintained for 90 minutes. The temperature of the solution is reduced to 65°C and Biozyme M5 (Amano Enzyme) and kleistase PL (Daiwa Fine Chemical Co., Ltd.) were added as β-amylase/pullulanase (enzyme) each in an amount of 0.01% to 0.1%. The mixture is stirred for about 20 hours and raised in temperature to 80°C or more to inactivate the enzymes. The saccharified liquid is filtrated through diatomite, passed through an ion exchange resin to remove salts, and passed through activated carbon to remove color and odor to obtain a solution of starch decomposition product (saccharified corn starch). Whether the state of decomposition is suitable for yeast fermentation or not can be checked by measuring the sugar to be utilized by HPLC.

The obtained solution of starch decomposition product (sometimes referred to as "saccharified corn starch") may be used directly or after appropriately concentrated or diluted. In the present Examples, the solution of starch decomposition product is preferably concentrated under reduced pressure to a solution of a biologically stable state, for example, containing a solid matter of 75%.

### Enzymatic decomposition of protein fraction

Decomposition of a protein fraction is performed to obtain a protein decomposition product such as amino acids and peptides, which used by yeast during a fermentation stage. The enzyme to be used for the decomposition and a method of reacting the enzyme are generally known in the art. For example, the decomposition can be performed by the following method.

A protein fraction is suspended in warm water such that the content of solid matter is 30%. The temperature of the suspension solution is raised to 95°C for sterilization, maintained for 20 minutes and reduced to 50°C. The pH of the suspension solution is adjusted to be neutral with sodium hydroxide and hydrochloric acid. To this, proteases such as flavorzyme (Novozymes A/S) and protin FA (Daiwa Fine Chemical Co., Ltd.) are added each in an amount of about 0.1% to 1.0% and allowed to react for 20 hours. The decomposition is performed to the extent that the content of free amino acid becomes 20% or more. To inactivate the enzyme, the temperature of the solution is raised to 95°C and maintained for 20 minutes. The reaction solution is filtrated through diatomite, passed through activated carbon to remove color and odor to obtain a corn protein decomposition solution. Whether the state of the decomposition solution is suitable or not for yeast fermentation can be checked by HPLC.

The corn protein decomposition solution thus obtained may be used directly or after appropriately concentrated, or diluted. Alternatively, the solution may be concentrated under reduced pressure to a solution containing a solid matter of 30% and spray-dried at 105°C for 5 to 10 seconds to obtain a corn protein decomposition product in the form of powder.

Treatment of fiber fraction under high-temperature high-pressure conditions
When a fiber fraction is treated with a high-temperature high-pressure fluid (e.g., saturated water vapor or water), the resultant fiber can be suitably used as a flavor/taste imparting material for a beer-taste beverage. The temperature of the fluid during treatment under high-temperature high-pressure conditions is not particularly limited as long as it is about 170°C to 200°C. Of the temperature range mentioned above, a temperature range of 180°C to 200°C is preferable. When the treatment temperature is less than 170°C, the content of a component contributing to rich taste and pungency is not effectively increased. On the other hand, when the treatment temperature is larger than 200°C, the generation amount of vanillin sharply increases, with the result that vanilla smell gets strong. Such a fluid may be sometimes unsuitable as a raw material for a fermented beverage depending upon the design of flavor/taste.

The high-temperature high-pressure treatment may be applied to a mixture of the fiber fraction and other corn-derived components such as corn grits. The high-temperature high-pressure treatment is desirably performed under the conditions of a low oxygen concentration.

Of the raw materials for a fermented beverage, the addition amount of a corn fiber fraction treated under high-temperature high-pressure conditions is not particularly limited as long as a fermented beverage having a good flavor/taste is obtained. For example, the fiber fraction can be added in a content of about 0.01% to 1% based on the raw material except water.

### Fermented beverage

The fermented beverage of the present invention includes all of beverages produced by a fermentation step with yeast such as low-malt beer beverage, beer, low alcohol fermented beverage (e.g., a fermented beverage containing alcohol in an amount of less than 1%), miscellaneous liquors, liqueurs and sprits. The beer-taste beverage mentioned above refers to a beverage obtained by fermenting a raw material containing a carbon source, nitrogen source and hop, etc., with yeast and having beer like aroma. Examples of the beer-taste beverage include miscellaneous liquors, liqueurs, sprits and low alcohol beverages (e.g., non-malt fermented beverage containing alcohol in an amount of less than 1%).

Of them, the present invention can be suitably applied to a fermented beverage prepared by using neither malt nor barley or only negligibly using them. In this case, the fermented beverage is produced through a fermentation step in which yeast is added to a saccharified solution obtained by saccharification of a grain such as rice or corn or a saccharified solution derived from a saccharide itself. As a nitrogen source, a protein derived from a plant except malt or a hydrolysis decomposition product thereof is used.

The alcohol content of the fermented beverage of the present invention is not particularly limited and desirably 1% to 15 %(v/v), and particularly desirably within the range of about the same content as that of an alcohol beverage preferably taken by consumers as a malt fermented beverage such as beer or low-malt beer beverage, that is, within the range of 3% to 8% (v/v).

### Production of fermented beverage

In the present invention, yeast fermentation is performed by fractionating corn serving as a raw material of a fermented beverage and processing it to obtain a starch decomposition product and a protein decomposition product, mixing them, if necessary, by adding hop, boiling the mixture, subjecting the mixture to solid/liquid separation to obtain a clear fermentation stock solution, and adding yeast to the fermentation stock solution. Note that the solid/liquid separation may be performed also after fermentation or only after fermentation.

To explain more specifically, to produce a fermented beverage, the following components are prepared and mixed.
(1) The starch decomposition product may be used in an amount of about 0.1% to 99% based on the amount of the raw material except water and hop (if used). The starch decomposition product is preferably obtained by enzymatic treatment of corn according to the aforementioned method; however, commercially available saccharified starch or starch syrup or the like, which is produced from corn as a raw material, may be used.
(2) On the other hand, the protein decomposition product may be used in an amount of about 0.1% to 50% based on the amount of the raw material except water and hop (if used). The protein decomposition product is preferably obtained by fractionating corn and treating the fractionated components with exogenous enzymes in accordance with the aforementioned method; however, a commercially available protein decomposition product (corn peptide) or the like may be used.

According to a preferable aspect of the present invention, a raw material such as malt containing large amounts of enzymes is not used as a sugar source for fermentation. In this case, it is preferable to blend, for example, 95% to 99.9% of a starch decomposition product and 0.1% to 5% protein decomposition product based on the amount of the raw material except water and hop (if used). This is because fermentation failure is avoided during a fermentation step and the resultant fermented beverage is excellent in flavor.
(3) Hop must be used in producing beer products including beer-taste beverage, low-malt beer beverage, liquors and sprits in order to impart beer-like aroma to these products. The hop may be appropriately selected from pellet hop, powdery hop, and hop extract that generally used in producing beers and the like, depending upon the flavor/taste. Furthermore, a processed hop product such as iso-hop, hexa-hop and tetra-hop may be used. The use amount thereof is from 0.1 g to 10 g per 1L of saccharified solution.
(4) Furthermore, as a desired component, a fraction other than a starch fraction and a protein fraction, separated during the fractionation of a non-wheat grain may be used if desired by appropriately processing it. Of them, a fiber fraction, if it is processed by high-temperature high-pressure water vapor of e.g., about 170°C to 200°C, can be suitably used as a raw material for imparting flavor/taste to a beer-taste beverage. The addition amount thereof is preferably about 0.01% to 1% based on the raw material except water and hop (if used).
(5) To a fermentation material, if necessary, a fermentation auxiliary agent such as yeast extract and yeast food, other sugar source and nitrogen source, and further, a water soluble dietary fiber such as hard degradable dextrin, polydextrose and water-soluble corn fiber may be added.

The aforementioned components (1) and (2), and, if necessary, part or whole of the components (3), (4) and (5) are mixed and dispersed in water, heated to about 100°C to sterilize them. If necessary, the supernatant is separated and used as a fermentation stock solution.

The yeast to be used for producing a fermented beverage can be freely selected in consideration of the type of a fermented beverage to be produced, desired taste/flavor and fermentation conditions. For example, commercially available beer yeast such as Weihenstephan-34 strain may be used.

The fermentation time and fermentation temperature during production of a fermented beverage can be freely selected in consideration of the type of a fermented beverage to be produced, desired taste/flavor and fermentation conditions. For example, in producing a beer-taste beverage, fermentation is performed at a fermentation temperature of 13°C until a predetermined alcohol concentration is obtained.

The mixture obtained after the fermentation may be used directly as a fermented beverage or sterilized by filtration or heating, and then used as a fermented beverage. To a fermented beverage, a coloring agent such as caramel or color molt extract may be added.

### Low sugar-level or low calorie fermented beverage

A preferable aspect of the fermented beverage of the present invention is a low sugar-level fermented beverage.

The fermented beverage obtained by the method of the present invention can be taken as a drink as it is. To produce a fermented beverage, which can be taken without taking sugar and calories as much as possible, the fermented beverage is diluted to obtain a low sugar-level beer-taste fermented beverage. This is because the non-wheat grain contained in a fermentation material according to the present invention, in particular, a corn-protein decomposition product, contains a large amount of isoleucine, and produces a large amount of isoamyl acetate during brewing. In particular, when fermentation is performed by setting the conditions such that the supernatant of the resultant fermented product contains isoamyl acetate in an amount from 2.0 ppm to 10.0 ppm (both not inclusive), even if the resultant fermented beverage is diluted 5 to 8 folds, the fermented beverage was found to keep excellent taste/flavor (Japanese Patent Application No. 2005-157921). The dilution is performed with water. At this time, to compensate loss of taste substances in the low sugar-level fermented beverage, acidulant, sweetener, bitter-tasting flavoring, water-soluble dietary fiber and alcohol may be added together. Alternatively, the compensation of loss of the taste substances may be separately performed after the dilution operation (Japanese Patent Application No. 2005-157921).

The sugar level may be reduced, in place of the dilution method or in combination therewith, by another method using a fermentation material containing trisaccharide, disaccharide and monosaccharide, which are easily assimilated by yeast, in a larger ratio in a carbon source (for example, 80% or more of the total carbon source).

The term "low sugar-level" means that the concentration of sugar in a fermented beverage is less than 0.8 wt%, in particular, less than 0.5 wt % in a solid base. Examples of a fermented beverage which is preferably low sugar-level include sake, wine, beer, low-malt beer beverage, liqueurs, sprits, miscellaneous liqueurs, and beer-taste fermented beverages. Particularly, low-malt beer beverage and a beer-taste fermented beverage are preferable, and a beer-taste fermented beverage is particularly preferable.

Examples of another preferable beverage according to the present invention may include a low calorie beverage, particularly, a beer-taste low calorie fermented beverage. The low calorie beverage refers to a beverage having a calorie of less than 20 kcal/100 ml and can be realized by reducing sugar level and/or alcohol level.

The beer-taste beverage of low sugar-level or low calorie often has a problem in imparting flavor. According to the technique of the present invention, since a protein fraction derived from a non-wheat grain material is used as a nitrogen source of fermentation material, it is sufficiently fermented with a good fermentation flavor can be imparted. Therefore, the technique of the present invention can be suitably used in producing low sugar-level and low calorie beer-taste beverage.

### Examples

The present invention will be described more specifically by way of examples below; however, the present invention will not be limited by the examples.

### Example 1 Preparation of corn-component fractions

Corn was carefully selected, lightly washed with water and soaked in sulfurous acid water containing 2000 ppm in terms of SO₂ for 48 hours. After soaking, corn was washed with water and ground by a disc mill or coffee mill after water was appropriately added thereto. When the germ portion was moved up, it was removed. The remaining portion was mashed well and the content was suspended in water. This was filtrated by a filter cloth to separate into a fibrous portion and a suspension portion. The remaining fibrous portion was collected and dried by hot air of 120°C until a moisture content became 10% or less. This was used as a corn-fiber fraction.

When the filtrate, that is, the suspension solution, was allowed to stand, a precipitate appeared. The supernatant was replaced with fresh (not used) water, thereby washing the precipitate (washed twice). After completion of washing, the precipitate was placed on a thin plate and allowed to develop while shaking with fresh (not used) water. The precipitate spread within the range from the starting point to the distal end. The precipitate present within the proximal half of the range was used as a starch fraction and the precipitate present within the distal half was used as a protein fraction.

The starch fraction was prepared by adding water such that the content of solid matter was 30%.

The protein fraction was dried with hot air of 90°C to 100°C up to a moisture content of 15% or less.

### Example 2 Production of starch decomposition product (saccharified corn starch)

The pH of the starch fraction obtained in Example 1 was adjusted to 6 with calcium hydroxide. To this, an appropriate amount (0.1%) of heat resistant α-amylase (Termamyl 120L, Novozymes A/S) was added, mixed well, and heated at 103°C for 5 minutes while stirring. The temperature of the mixture was reduced to 95°C and maintained for 90 minutes. After the temperature of the mixture was reduced to 65°C, 0.1% of Biozyme M5 (Amano Enzyme) and 0.1% of kleistase PL (Daiwa Fine Chemical Co., Ltd.) were added thereto as β-amylase/pullulanase enzyme. The mixture was stirred for about 20 hours and heated to 80°C or more to inactivate the enzymes. The saccharified liquid was filtrated through diatomite, passed through an ion exchange resin to remove salts, and passed through activated carbon to remove color and odor to obtain a saccharified corn starch solution.

The resultant saccharified corn starch suspension solution may be used directly or after appropriately concentrated or diluted. In this Example, the saccharified corn starch suspension solution was preferably concentrated under reduced pressure to a biologically stable state with a solid matter content of 75%.

### Example 3 Production of corn protein decomposition product

The protein fraction obtained in Example 1 was suspended in warm water such that the solid matter was 30%. The temperature of the mixture was raised to 95°C and maintained for 20 minutes for sterilization. The temperature of the mixture was reduced to 50°C and the pH of the mixture was adjusted to be neutral with sodium hydroxide and hydrochloric acid. To this, flavorzyme (Novozymes A/S) and protin FA (Daiwa Fine Chemical Co., Ltd.) were added each in an amount of about 0.5 % and allowed to react for 20 hours. Decomposition was performed until free amino acid was obtained in an amount of 20% or more. To inactivate the enzyme, the temperature of the solution was increased to 95°C and maintained for 20 minutes. The reaction solution was filtrated through diatomite, passed through activated carbon to remove color and odor to obtain a corn protein decomposition solution.

The corn protein decomposition solution thus obtained may be directly used or after appropriately concentrated or diluted. In this example, the solution was concentrated under reduced pressure to 30% in a solid base, spray-dried at 105°C for 5 to 10 seconds to obtain a corn protein decomposition product in the form of powder.

### Example 4 Production of a fiber fraction under high-temperature high-pressure conditions

The fiber fraction obtained in Example 1 was treated by use of a high temperature wet-heat processing test apparatus (HTS-25/140-8039, manufactured by Hisaka Works Ltd.) and a high-pressure vapor boiler (FH-100 manufactured by Miura Co. Ltd.). To a 12L basket made of SUS316 alloy, 2 kg of the fiber fraction was placed and closed tight in a heat/pressure resistant container (30L) made of SUS316 alloy. The air in the container was replaced by feeding, for about one second, high-temperature high-pressure saturated vapor (2.7 Mpa, 230°C), generated by using water from which oxygen was removed (to an oxygen content of 0.3 µg/ml) by a deoxygenation apparatus (DOR-1000P manufactured by Miura Co. Ltd.). Subsequently, high-temperature high-pressure treatment was performed under the conditions: temperature: 190°C, pressure: 0.9 MPa, treatment time: 60 seconds. In either case, the reaction container was evacuated and maintained under vacuum for 30 minutes. In this manner, vacuum dry was performed to obtain a fiber fraction treated under high-temperature high-pressure conditions.

### Example 5 Production of beer-taste beverage using purified product of fractions derived from corn

### Brewing conditions

As a fermentation material, a sample of a corn material alone (100%) (Standard 1: Comparative Example) and samples in which the saccharified corn starch obtained in Example 2 and the corn protein decomposition product obtained in Example 3 were mixed in various ratios (Standards 2 to 4), and a sample (Standard 5) in which the corn fiber fraction obtained in Example 1, and treated with high-temperature and high-pressure steam, was further added to Standards 2 to 4 were used to produce beer-taste beverages brewed from them.

Specific blending ratio of each of Standards is shown in Table 1. Note that a fermentation auxiliary agent (yeast extract) was added in Standard 2.

**[Table 1]**

| Raw material formulation | | | | | | |
|---|---|---|---|---|---|---|
| | | Standard-1 | Standard-2 | Standard-3 | Standard-4 | Standard-5 |
| Corn material | | 20 kg | 0 kg | 0 kg | 0 kg | 0 kg |
| Saccharified corn starch | | 0 kg | 17.6 kg | 17.6 kg | 17.6 kg | 17.6 kg |
| Corn protein decomposition product | | 0 kg | 0.1 kg | 0.25 kg | 0.4 kg | 0.25 kg |
| Fiber fraction treated with high-temperature high-pressure saturated vapor | | 0 g | 0 g | 0 g | 0 g | 20 g |
| Yeast extract | | 0 g | 0.1 g | 0 g | 0 g | 0 g |
| Water | | 60 L | 92.4 L | 92.4 L | 92.4 L | 92.4 L |
| Enzymes | Heat resistant α-amylase | 40 ml | 0 g | 0 g | 0 g | 0 g |
| | Protease | 90 g | 0 g | 0 g | 0 g | 0 g |
| | α-amylase | 100 g | 0 g | 0 g | 0 g | 0 g |
| Hop | | 30 g | 30 g | 30 g | 30 g | 30 g |
| Caramel | | 60 g | 60 g | 60 g | 60 g | 60 g |

A brewing test of each Standard was performed as follows.

Standard-1
1) A corn material (from which germ was removed) was ground and mixed with water. To this, 0.1% of a protease (Neutrase, 0.5L, Novozyme A/S) was added while stirring and maintained at 60°C for 30 minutes.

2) 0.1% of heat resistant α-amylase (Termamyl 120L: Novozymes A/S) was added and the resultant mixture was heated to 85°C to 100°C while stirring and maintained for 20 minutes.

3) Cold water (0°C) was added while stirring and the mixture was cooled to 60°C. Then, 0.1% of α-amylase (Finger mil 800 L: Novozyme A/S) was added and maintained for 30 minutes.

4) After maintaining for a predetermined time, the temperature of the mixture was raised to 77°C and subjected to a filtration step.

5) The saccharified mash thus purified was filtrated by a mush filter to obtain a clear saccharified filtration. Thereafter, addition of hop, boiling separation of residue, cooling of saccharified liquid, fermentation, filtration and bottle-packaging were performed in accordance with a conventional method.

### Standards-2 to 4

1) To a boiling jar for hop, the saccharified corn starch and the corn protein decomposition product were added in predetermined amounts as shown in Table 1. The mixture was heated and dissolved.

2) After dissolution, addition of hop, boiling, separation of residue, cooling of saccharified liquid, fermentation, filtration and bottle-packaging were performed in accordance with a conventional method.

### Standard-5

1) To a boiling jar for hop, the saccharified corn starch and the corn protein decomposition product were added in the same amounts as those in Standard-3. The mixture was heated and dissolved.

2) At this time, the fiber fraction treated with high-temperature high-pressure saturated vapor (treated with a saturated water vapor of 190°C for 60 seconds) was added and thereafter, addition of hop, boiling, separation of residue, cooling of saccharified liquid, fermentation, filtration and bottle-packaging were performed in accordance with a conventional method.

**[Table 2]**

| Chemical analysis value of product | | | | | | |
|---|---|---|---|---|---|---|
| | | Standard-1 | Standard-2 | Standard-3 | Standard-4 | Standard-5 |
| Original extract | % | 12.0 | 12.0 | 12.0 | 12.0 | 12.0 |
| Apparent fermentation degree | % | 82.0 | 88.1 | 92.1 | 91.8 | 91.6 |
| Total amount of diacetyls | mg/l | 0.10 | 0.06 | 0.02 | 0.01 | 0.03 |

**[Table 3]**

| Sensory evaluation of product | | | | | |
|---|---|---|---|---|---|
| | Standard-1 | Standard-2 | Standard-3 | Standard-4 | Standard-5 |
| Refreshing taste | 3.0 | 3.6 | 5.0 | 4.2 | 5.0 |
| Crisp/clear taste | 2.3 | 3.5 | 4.8 | 5.0 | 4.6 |
| Throat sensation | 3.0 | 3.0 | 4.8 | 5.0 | 5.0 |
| No sweet aftertaste | 1.0 | 3.3 | 4.7 | 4.5 | 4.5 |
| Presence of young aroma | 4.0 | 1.0 | 0.0 | 0.0 | 0.0 |

| | | | | | |
|---|---|---|---|---|---|
| Average of evaluation scores by 6 experts | | | | | |

### Results of brewing

Degree of fermentation of the beer-taste beverage produced for the test of each standard was evaluated by chemical analysis and sensory test performed by a panel consisting of 6 experts. In the sensory test, evaluation items including refreshing taste, crisp/clear taste, throat sensation, no sweet aftertaste, and presence of young aroma were scored by scale of 0.0 (not feel) to 5.0 (strongly feel).

The results of the chemical analysis are shown in Table 2. The results of the sensory test are shown in Table 3.

The beer-taste beverage of Standard 1 (Comparative Example) showed unsatisfactory results with respect to appearance fermentation degree and total amounts of remaining diacetyls. The beer-taste beverages of Standards 2 to 5, particularly, Standards 3 to 5, exhibited more satisfactory results than Comparative Example. The beverage of Standard 5 exhibited very satisfactorily results.

### Example 6 Production of beer-taste beverage using purified product of fractions derived from corn

In a hop boiling jar, 17.6 kg of the saccharified corn starch obtained in Example 2, 0.25 kg of the corn protein decomposition product produced in Example 3, 20 g of a corn fiber fraction produced and treated under high-temperature high-pressure conditions in Example 4, 0.1 kg of commercially available yeast extract, 120 g of commercially available hop and 240 g of commercially available caramel were placed and dissolved in 92 L of water. The mixture solution was boiled for 60 minutes and allowed to stand still. In this manner, the fiber fraction treated under high-temperature high-pressure conditions and hop meal were removed to obtain a fermentation stock solution. To the fermentation stock solution, beer yeast (Weihenstephan-34 strain) was added such that living cells were contained at a rate of 20 × 10⁶ cells/ml. Fermentation was performed at 13°C for 8 days. After assimilation of the carbon source, yeast was removed by filtration. The fermentation solution (5 L) was diluted by degassed water (15 L) and carbonic acid gas was added thereto to produce a low sugar-level fermented beverage.

No fermentation failure was observed during production. Furthermore, the fermented beverage obtained was free from young aroma and diacetyl odor and exhibited chemical analysis values suitable for a beverage (Table 4). More specifically, a fermented beverage of good low sugar-level and low calorie was obtained.

**[Table 4]**

| | |
|---|---|
| Isoamyl acetate | 0.9 mg/l |
| Sugar concentration | 0.48 w/w% |
| Fermentation state | Good |
| Total amount of diacetyls | 0.01 mg/l |
| Young aroma | Not feel |
| Alcohol concentration | 1.5 v/v% |
| Calorie | 18 kcal/100 ml |

### INDUSTRIAL APPLICABILITY

The present invention makes it possible to produce a fermented beverage from a non-wheat grain such as corn as a raw material while avoiding difficulties in a preparation step, overcoming causes of fermentation failure, ensuring crisp/clear throat sensation and robust feel that have been absent from conventional beer-taste beverages, thereby satisfying consumer's palatability.

## Claims

1. A fermented beverage **characterized by** brewing by use of a starch fraction obtained from a non-wheat grain and a protein fraction obtained from the non-wheat grain as a fermentation material.

2. The fermented beverage according to claim 1, **characterized by** obtaining a starch decomposition product by decomposing the starch fraction and separately obtaining a protein decomposition product by decomposing the protein fraction, mixing the decomposition products to obtain a fermentation material, and brewing from the fermentation material.

3. The fermented beverage according to claim 2, **characterized in that** an amylase is used in the step of decomposing the starch fraction and a protease is used in the step of decomposing the protein fraction.

4. The fermented beverage according to claim 1, **characterized by** brewing by use of a fiber fraction obtained from a non-wheat grain as well as the starch fraction obtained from the non-wheat grain and the protein fraction obtained from the non-wheat grain as a fermentation material.

5. The fermented beverage according to claim 4, **characterized by** brewing from the fermentation material containing also a fiber fraction obtained from a non-wheat grain and treated under high-temperature high-pressure conditions as well as the starch decomposition product and the protein decomposition product.

6. The fermented beverage according to claim 5, **characterized by** brewing from a fermentation material containing a fiber fraction treated under high-temperature high-pressure conditions of 170°C to 200°C.

7. The fermented beverage according to any one of claims 1 to 6, wherein the non-wheat grain is corn.

8. The fermented beverage according to claim 7, wherein the corn is ungerminated.

9. The fermented beverage according to claim 7 or 8, obtainable by brewing from a fermentation material in which a corn starch decomposition product occupies 90% or more of a carbon source.

10. The fermented beverage according to any one of claims 1 to 9, obtainable by brewing from a fermentation material containing 95% to 99.9% of the starch fraction and 0.1% to 5% of the protein fraction based on the fermentation material except water.

11. The fermented beverage according to claim 10, obtainable by brewing from a fermentation material containing 0.01% to 1% of the fiber fraction based on the fermentation material except water.

12. The fermented beverage according to claim 10 or 11, obtainable by brewing from a fermentation material containing a decomposition product of corn protein fraction as the protein fraction in an amount of 0.5% to 1.5% based on the fermentation material except water.

13. The fermented beverage according to any one of claims 1 to 12, **characterized in that** wheat including malt is not used as a raw material.

14. The fermented beverage according to any one of claims 1 to 13, **characterized in that** hops are also added to the fermentation material.

15. The fermented beverage according to claim 14, obtainable by brewing from a fermentation material containing 0.01% to 1% of hop based on the fermentation material except water.

16. The fermented beverage according to claim 14 or 15, wherein the beverage is a beer-taste beverage.

17. The fermented beverage according to claim 16, wherein the beverage is a low sugar-level beer-taste beverage or a low calorie beer-taste beverage.

18. The fermented beverage according to any one of claims 1 to 13, wherein the beverage is a fermented beverage other than the beer-taste beverage.

19. The fermented beverage according to claim 18, wherein the beverage is a low sugar-level fermented beverage or a low calorie fermented beverage.

20. A method of producing a fermented beverage by alcohol fermentation of an aqueous solution containing the fermentation material according to any one of claims 1 to 15 by use of yeast and in fermentation conditions suitable for producing a desired brewed alcohol.
